# EUROPEAN PATENT APPLICATION

(11) **EP 4 832 354 A1**
(43) Date of publication of application: **28.10.2026**
(21) Application number: 25172702.0
(22) Date of filing: 25.04.2025
(51) Int. Cl.: H04B 1/00, H01Q 1/24, H04B 1/04, H04B 1/18, H04B 1/10

(54) **ANTENNA ARRANGEMENTS**

(71) Applicant: Nokia Solutions and Networks Oy, 02610 Espoo (FI)
(72) Inventor: KOMULAINEN, Mikko, 90420 Oulu (FI); PEETERS, Ronny, 2660 Hoboken (BE); E VAN DRIESSCHE, Tom Rudolf, 9220 Hamme (BE)
(74) Representative: Bryers Intellectual Property Ltd

(57) **Abstract**

In some examples, an apparatus comprises an antenna structure comprising at least two heterogeneous radio systems, and a controller configured to compare a set of performance metrics associated with the at least two heterogeneous radio systems in relation to a set of devices connected to the apparatus, and, on the basis of the comparison, reconfigure at least one of a structural or functional parameter of one or more of the at least one heterogeneous radio systems, whereby to optimize radio performance of the apparatus for the set of devices.

## Description

### Technical Field

The present disclosure relates, in general, to wireless communication systems. Aspects of the disclosure relate to adaptive and reconfigurable antenna systems for use in communication devices.

### Background

Communication devices, such as WiFi access points and Fixed Wireless Access (FWA) gateway devices, are critical components of modern wireless networks. These devices are responsible for providing seamless connectivity to end users in residential, enterprise, and industrial settings. As the demand for higher data rates, improved coverage, and reduced latency continues to grow, the need for advanced antenna systems capable of adapting to diverse environments and user scenarios has become increasingly important.

### Summary

An objective of the present disclosure is to provide adaptive and reconfigurable antenna systems for use in communication devices, capable of dynamically adjusting structural and functional parameters based on real-time radio performance metrics.

The foregoing and other objectives are achieved by the features of the independent claims.

Further implementation forms are apparent from the dependent claims, the description and the Figures.

A first aspect of the present disclosure provides an apparatus comprising an antenna structure comprising at least two heterogeneous radio systems, and a controller configured to compare a set of performance metrics associated with the at least two heterogeneous radio systems in relation to a set of devices connected to the apparatus, and, on the basis of the comparison, reconfigure at least one of a structural or functional parameter of one or more of the at least one heterogeneous radio systems, whereby to optimize radio performance of the apparatus for the set of devices.

The controller may be further configured to trigger measurement of one or more radio link quality metrics for respective ones of the at least two heterogeneous radio systems, and, using the measured one or more radio link quality metrics, generate one or more performance metrics for the set of metrics, wherein a performance metric comprises one of a measure representative of a radio link quality metric or a predefined combination of respective measures of multiple radio link quality metrics.

A radio link quality metric may comprise one of a radio frequency signal strength, a signal quality, throughput, packet error rate, at least one parameter associated with a radiation pattern.

The at least two heterogeneous radio systems may comprise at least one of a phased array antenna structure, a switchable antenna structure, an omni directional antenna structure, a high gain directional antenna structure, a motorised antenna structure, a wideband antenna structure, a multiband antenna structure, a switched beam antenna structure, an adaptive array antenna structure.

The at least one of the antenna structures may be reconfigurable to provide omni-directional or high-gain directive radiation patterns.

At least one of the antenna structures may be mechanically adjustable, whereby to vary an orientation of at least one antenna thereof.

The apparatus may further comprise a set of radio frequency, RF, switches configured to at least one of select or reconfigure one or more antennas of the antenna structure.

The controller may be configured to use the set of RF switches to select at least one pathway for signal routing between one or more antennas of the antenna structure and at least one transceiver of the apparatus.

The controller may be configured to use the set of RF switches to select one or more of the at least two heterogeneous radio systems for use.

The controller may be configured to use the set of RF switches to select one or more frequency bands for use by the apparatus.

The at least two heterogeneous radio systems may comprise at least one of a WiFi radio system operating in one or more of a 2.4GHz, 5GHz and 6GHz frequency band, and/or a 3GPP radio system operating according to one or more of a 5G and 6G or sub-7GHz spectrum technology.

A second aspect of the present disclosure provides a method comprising comparing, by an apparatus, a set of performance metrics associated with the at least two heterogeneous radio systems in relation to a set of devices connected to the broadband apparatus, and, on the basis of the comparison, reconfiguring at least one of a structural or functional parameter of one or more of the at least one heterogeneous radio systems, whereby to optimize radio performance of the apparatus for the set of devices.

The method may further comprise triggering measurement of one or more radio link quality metrics for respective ones of the at least two heterogeneous radio systems, and using the measured one or more radio link quality metrics, generating one or more performance metrics for the set of metrics, wherein a performance metric comprises one of a measure representative of a radio link quality metric or a predefined combination of respective measures of multiple radio link quality metrics.

A radio link quality metric may comprise one of a radio frequency signal strength, a signal quality, throughput, packet error rate, at least one parameter associated with a radiation pattern.

The at least two heterogeneous radio systems may comprise at least one of a phased array antenna structure, a switchable antenna structure, an omni directional antenna structure, a high gain directional antenna structure, a motorised antenna structure, a wideband antenna structure, a multiband antenna structure, a switched beam antenna structure, an adaptive array antenna structure.

These and other aspects of the invention will be apparent from the embodiment(s) described below.

### Brief Description of the Drawings

In order that the present disclosure may be more readily understood, embodiments will now be described, by way of example, with reference to the accompanying drawings, in which:
Figure 1 is a schematic representation of an RF switch arrangement according to an example;
Figure 2 is a schematic representation of use cases, according to an example;
Figure 3 is a schematic representation of an apparatus according to an example; and
Figure 4 is a flow chart of a method according to an example.

### Detailed Description

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

The phrases "in one implementation," or "in some implementations," may each refer to one or more of the same or different implementations. The term "coupled" is defined as connected whether directly or indirectly through intervening components and is not necessarily limited to physical connections. The expression "at least one of A, B and C" or "at least one of the following: A, B and C" means "only A, or only B, or only C, or any combination of A, B and C."

The terms "system" and "network" may be used interchangeably.

For the purposes of explanation and non-limitation, specific details such as functional entities, techniques, protocols, and standards are set forth for providing an understanding of the present disclosure. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software or a combination of software and hardware. Disclosed functions may correspond to modules which may be software, hardware, firmware, or any combination thereof.

A software implementation may include machine- and/or computer- readable and/or executable instructions stored on a machine- and/or computer-readable medium such as memory or other types of storage devices. One or more microprocessors or general-purpose computers with communication processing capability may be programmed with corresponding executable instructions and perform the disclosed network function(s) or algorithm(s).

The microprocessors or general-purpose computers may include Applications Specific Integrated Circuitry (ASIC), programmable logic arrays, and/or using one or more Digital Signal Processor (DSPs). Although some of the disclosed implementations are oriented to software installed and executing on computer hardware, alternative implementations implemented as firmware or as hardware or as a combination of hardware and software are well within the scope of the present disclosure. The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

Smart antenna systems represent a significant advancement in wireless technology. Unlike traditional fixed antennas, smart antennas are reconfigurable and capable of dynamically adjusting their operating characteristics. These characteristics include operating frequency, radiation pattern, directionality of the radiation pattern, and polarization of radiated signals. By enabling such adaptability, smart antennas can enhance the performance of individual devices and improve overall network coverage and capacity.

The implementation of smart antenna systems introduces several technical challenges. These include optimizing the configuration of antennas to suit varying device placements (e.g., central room placement, near an outer wall, or in a corner), addressing interference from neighbouring devices, and ensuring efficient use of spectrum across multiple frequency bands. Furthermore, an additional challenge arises when trying to integrate the smart antenna implementations within a single device, in particular in devices supporting multiple radio access technologies.

The development of smart antenna systems also involves leveraging various types of antennas and control mechanisms. These include omni-directional antennas for broad coverage, high-gain directional antennas for focused signal strength, phased array antennas for electronically steerable beams, and motorized antennas for mechanical adjustments. Wideband and multiband antennas are often employed to support multiple frequency ranges used by different radio technologies within a single device.

Effective control of smart antenna systems relies on measuring key radio link quality metrics such as signal strength, signal quality, throughput, and interference levels. These metrics enable dynamic reconfiguration of antenna resources to achieve optimal performance under varying conditions. Advanced control signals-such as those using General-Purpose Input/Output (GPIO) or Mobile Industry Processor Interfaces (MIPI)-facilitate communication between the central processing unit (CPU) and components like radio frequency (RF) switches or phase shifters that govern antenna behaviour.

According to the present disclosure there are provided arrangements for controlling antenna systems. For example, arrangements are provided for controlling smart antenna systems in broadband devices, which maximize overall device performance whilst ensuring efficient operation across multiple radio technologies or frequency bands.

An antenna structure for an apparatus, such as an apparatus comprising smart antenna system/device, according to an example, can comprise a hardware RF configuration of 4x4 Multiple-Input Multiple-Output (MIMO), with four transceivers connected to eight antennas. These antennas may comprise four omni-directional antennas and four high-gain directive antennas arranged in, e.g., a cylindrical configuration inside the device. The high-gain antennas will typically be oriented at 90° angles relative to each other, enabling directional radiation patterns that complement the omni-directional antennas' uniform coverage. This arrangement provides flexibility in tailoring the radiation pattern to suit various use cases.

Each transceiver can connect to either an omni-directional or a high-gain antenna via RF switches, which are controlled independently. This enables dynamic reconfiguration of the antenna system, resulting in multiple possible configurations. For example, the system can operate with all omni-directional antennas, a mix of omni-directional and high-gain antennas, or exclusively high-gain antennas. These configurations can be selected based on, e.g., the placement of the apparatus and/or the distribution of client devices. For instance, when the apparatus is centrally located in a room, all omni-directional antennas may be used to provide uniform coverage. Conversely, if the apparatus is near an outer wall or in a corner, combinations involving high-gain antennas may be employed to focus coverage toward areas with client devices.

This improves coverage and throughput at network edges when using high-gain directive antennas, and enhances signal strength and throughput for medium-range clients within the beam coverage of the high-gain antennas. Additionally, the narrower beams of high-gain antennas help reduce interference by being more selective in their reception and transmission.

The number of transceivers, MIMO schemes, and antenna types can vary depending on the specific application. Antennas can be single-band, wideband, or multiband, and their radiation patterns, polarization, and operating frequencies can be reconfigurable through electrical or electromechanical means such as RF switches, phased arrays, or digitally tuneable capacitors (DTCs).

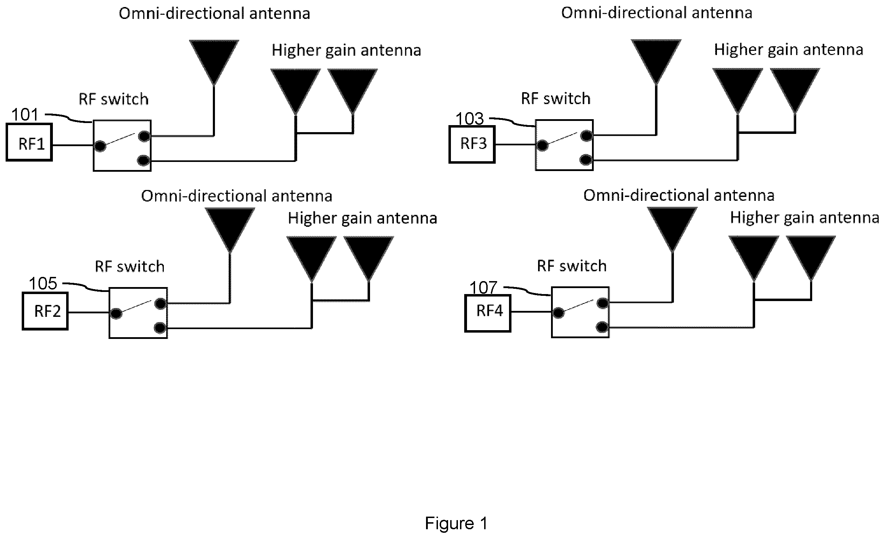

Figure 1 is a schematic representation of an RF switch arrangement according to an example. In the example of Figure 1, four transceivers, RF1 - RF4, are connected to eight antennas via a set of RF switches 101 - 107. In the arrangement of Figure 1, any of the four transceivers can be connected to either one omni-directional antenna or one high gain antenna structure, thereby enabling varying configurations of antennas to be selected. In an example, each RF switch 101 - 107 may be controlled separately. As such, a reconfigurable antenna configuration can be provided, enabling different radiation patterns to be selected. Possible antenna configurations are a single permutation with four omni-directional antennas, four permutations of one high gain antenna structure and three omni-antennas, six permutations of two high gain antenna structures and two omni-antennas, four permutations with three high gain antenna structures and one omni-antenna, and one permutation of four high gain antenna structures.

An example arrangement for controlling smart antenna implementations for broadband devices may comprise a device comprising two distinct smart antenna systems for different frequency bands (e.g., one for the 5 GHz WiFi band and another for the 6 GHz WiFi band), where procedures may include measuring the performance (in terms of RF signal strength, quality, and throughput) for both AP-connected clients and AP-connected extenders, followed by comparing the results and selecting the optimal configuration for each group.

Another example arrangement may comprise a device in which the smart antenna system and radio hardware (including control signals) may be configured to allow either radio system to be reconfigured and connected to either of the smart antenna systems. In one embodiment, one radio system may be used for WAN (e.g., 3GPP access) and another for LAN (WiFi AP), with smart antenna selection procedures tailored respectively for the client and access point functions.

Another example arrangement may comprise a device wherein individual antennas from two smart antenna systems may be measured and selected independently for use with distinct radio systems. In this configuration, a mix and match approach may be employed, allowing antennas from a smart antenna switching system and a phased array system to be combined for optimal performance on, for example, a 3GPP access client and a WiFi AP.

Yet another example arrangement for controlling smart antenna implementations may comprise a device comprising a single smart antenna system that may be time division multiplexed between two different radio systems. In such an arrangement, RF signals and control signals may be synchronized so that one radio system is active at a given time while the other is inactive, with the switching being controlled by either separate smart antenna control signals for each radio system or by a single integrated CPU.

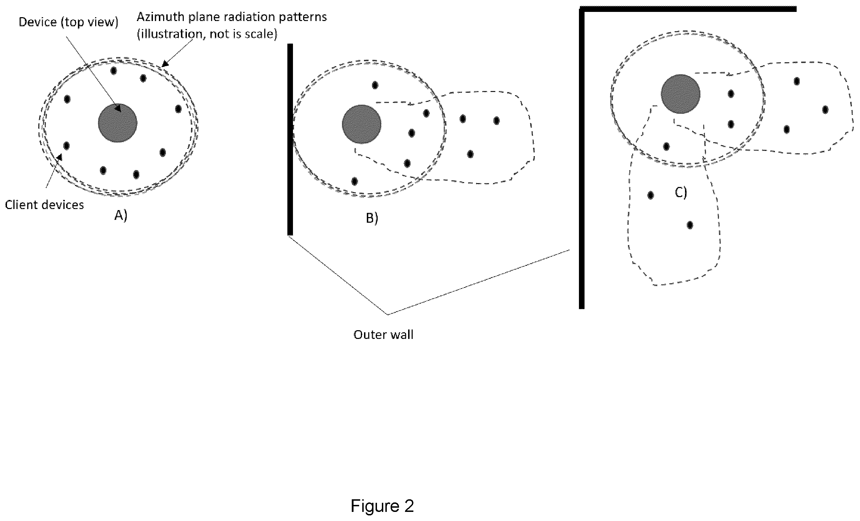

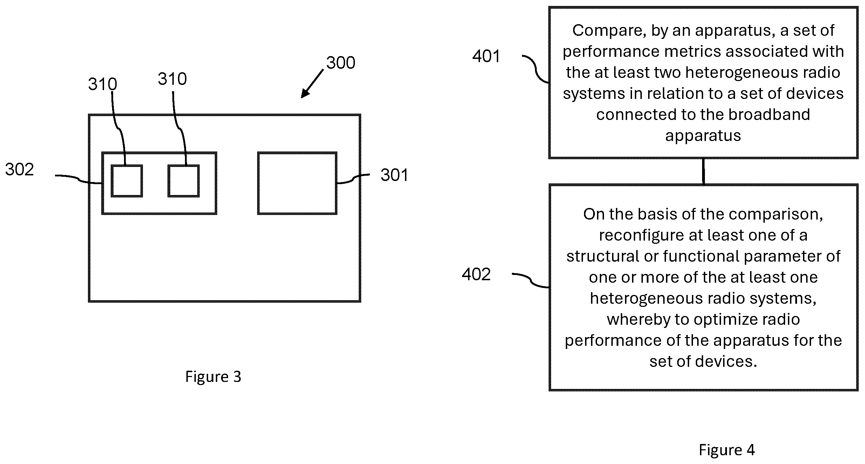

Figure 2 is a schematic representation of use cases, according to an example. In the example of Figure 2A, an apparatus, comprising a smart antenna device, is in the middle of room and clients are distributed generally equally around the device. In this scenario, the best configuration is likely to be the use of all omni-directional antennas. Figure 4B illustrates a situation where the device is located, e.g., beside an outer wall with client devices located at three sides of the device. In this scenario, an antenna configuration with three omni-directional antennas and one high gain antenna is likely going to be more effective than a configuration with four omni-antennas. As depicted in figure 2C, the device is located in a corner and client devices are at two sides. An antenna configuration with two omni-directional antennas and two high gain antennas could be used for this scenario.

According to an example, an apparatus as described herein can comprise any number of transmitters / receivers / transceivers / MIMO, RX and TX diversity scheme and antennas. Antennas or antenna arrays can be implemented with any gain and/or radiation pattern. Antennas may be arranged in any location inside an apparatus with respect to one other. All and/or part of antennas can be internal and/or external to an apparatus. Antennas or antenna arrays can be of single band, wideband or multiband type. Antennas or antenna arrays can be radiation pattern and/or polarization and/or operating frequency reconfigurable by any means. This includes, but is not limited to, electrical or electromechanical switching, phasing an antenna array, use of digitally tuneable capacitors (DTCs), or any mix of these. Radio systems where the smart antenna configuration is applied can be WiFi, including any or all WiFi bands. Alternatively, the apparatus may be incorporated into any radio system.

According to an example, antenna selection may or may not include other radio performance features such as WiFi band steering, multiuser MIMO or channel hopping. In an example, the apparatus may form part of a mesh network connected to WAN via fiber or 3GPP radio access technology or the like.

Fixed wireless access (FWA) devices have become popular among with fifth generation (5G) cellular networks. 5G has brought new frequency bands and features for 3GPP access technology, which have made FWA use technically and economically feasible. A FWA gateway (GW) device has 3GPP access, e.g., using a 5G modem and SIM card. The device creates wireless a WAN connection to a 5G network, forming a 3GPP access User Equipment (UE). That is, the device may be a client for the 5G network. The device also has WiFi capability and can forward WAN bits to LAN via WiFi. For WiFi, the FWA gateway device may act as an access point (AP). A device may have a smart antenna implementation for 3GPP access technology or for WiFi, or for both.

Accordingly, the 3GPP access part of a FWA GW is a client to the WAN network and the WiFi part is an AP to a LAN network. Smart antenna selection for 3GPP access can be performed based on, e.g., RF signal strength, quality and throughput (TP) parameters. Smart antenna selection for WiFi part can be performed based on AP strength, quality and TP parameters accounting for the entire network with multiple clients and possible extender devices connected to it.

Typically, either wide-band or multiband antennas are used in broadband devices. In this context, the term "wideband antenna" may refer to an antenna that is used to cover multiple adjacent frequency ranges. For example, in the context of WiFi, an antenna can cover frequency ranges of the 5GHz WiFi band (5.15-5.85 GHz) and the 6 GHz frequency range (5.925 - 7.125 GHz). Multiband antenna may refer to an antenna which covers multiple different frequency ranges. For example, in the context of WiFi, a multiband antenna could cover e.g., the 2.4 GHz band (2.4-2.4835 GHz), the 5GHz WiFi band (5.15-5.85 GHz), and the 6 GHz frequency ranges (5.925 - 7.125 GHz), but not the entire frequency of 2.4- 7.125 GHz. The same applies for antennas used for 3GPP. 3GPP frequency bands typically used for FWA are between a frequency range of 600-4900 MHz.

According to an example, a smart antenna control signal may refer to, e.g., a signal or signals to control operation of one or more RF switches. For example, the signal(s) may set an RF switch to a certain position or set a phase shifter to provide a certain phase shift for an RF signal. By controlling individual RF switches/phase shifters, the entire smart antenna system can be controlled. Control signals can originate either by each of smart antenna system CPUs individually, or by way of a centralized single CPU that communicates with and controls all the smart antenna implementations in the same device.

Figure 3 is a schematic representation of an apparatus according to an example. The apparatus 300 comprises an antenna structure 302 comprising at least two heterogeneous radio systems 310. In certain embodiments, the apparatus may integrate multiple antenna types-such as phased array, motorised, and switched beam structures-which may be configured via the RF switches described above in relation to Figure 1. The antenna systems may be reconfigurable to operate in omni-directional mode, high-gain directional mode, or a hybrid configuration, depending on the spatial distribution of client devices, as further exemplified in Figure 2.

The apparatus 300 also comprises a controller 301, configured to compare a set of performance metrics associated with the at least two heterogeneous radio systems 310 in relation to a set of devices connected to the apparatus 300. These performance metrics may include signal strength, throughput, packet error rate, and radiation pattern parameters. On the basis of the comparison, the controller 301 is arranged to reconfigure at least one of a structural or functional parameter of one or more of the at least one heterogeneous radio systems 310, whereby to optimize radio performance of the apparatus 300 for the set of devices. This reconfiguration may involve, for example, adjusting operating frequencies, modifying radiation patterns, or switching between antenna elements via electronically or electromechanically controlled components (e.g., RF switches or phase shifters).

In other example embodiments, the smart antenna hardware and its control-signal routing may be made fully reconfigurable so that either of two radio systems - such as a 3GPP access client (e.g., a 5G UE with modem and SIM) and a WiFi access point - may be selectively connected to either of two independent smart antenna systems. In such a configuration, the device may first route the 3GPP RF signals through DPDT RF switches to each antenna system in turn, measure key performance metrics (signal strength, link quality, and throughput) for the 3GPP client on both antenna systems, then similarly switch and measure the WiFi RF signals and control paths to determine the best-performing antenna system for the AP. Thereafter, the controller may configure the RF-switch matrix to map the 3GPP client RF and control signals to the antenna system that demonstrated optimal 3GPP performance and the WiFi RF and control signals to the antenna system that demonstrated optimal WiFi performance. Where one antenna system outperforms the other for both radio systems, a predefined tie-break rule may be applied (for example, prioritising the 3GPP WAN link over the WiFi LAN).

An alternative implementation may consolidate all RF-switch and antenna-control multiplexing under a single, central CPU, obviating the need for separate control-signal paths for each radio system.

In yet another embodiment, fine-grained mixing and matching of individual RF signal lines may be supported by allowing any of the two radio systems' RF outputs to be flexibly mapped to any of the individual antennas across both smart antenna systems. The apparatus may enumerate all sixteen antenna permutations (or a selected subset, if the full set is impractically large) and measure performance for the 3GPP client, select the top four antennas, remove them from consideration for the WiFi AP, and subsequently measure among the remaining twelve antennas to choose the best four for the AP. The RF switches and control paths are then configured so that the 3GPP client uses its chosen quartet of antennas (for example, a mixture of switched-antenna and phased-array elements), while the WiFi AP uses its own distinct quartet.

Still further, a single smart antenna system may be time-division multiplexed between two radio systems. In this arrangement, each RF signal line of both radio systems may pass through its own RF switch into a shared antenna array, ensuring that at any one time only one radio system's signals reach the antennas. Control signals may be multiplexed via separate smart-antenna paths or managed by a unified CPU. A first time interval may be allocated for smart-antenna selection and operation by a first radio system (e.g., the 3GPP client), and a subsequent, non-overlapping interval for a second radio system (e.g., the WiFi AP), with each system using the antenna configuration selected during its interval. Advantageously, by synchronising these intervals, a single hardware antenna array can serve two distinct radio systems without mutual interference.

Figure 4 is a flow chart of a method according to an example. The method comprises, in block 401, comparing, by an apparatus, a set of performance metrics associated with the at least two heterogeneous radio systems in relation to a set of devices connected to the broadband apparatus. As discussed above, these metrics may be derived from radio link quality measurements that include parameters such as RF signal strength, quality indexes, throughput, and interference levels.

In block 402, the method comprises, on the basis of the comparison, reconfiguring at least one of a structural or functional parameter of one or more of the at least one heterogeneous radio systems, whereby to optimize radio performance of the apparatus for the set of devices. This reconfiguration may be achieved by selectively activating RF switches, adjusting phase shifters, or altering digitally tunable capacitors, as depicted by the configurable antenna arrangements of Figure 1, to dynamically select the antenna configuration that best suits the deployment scenario. For example, if client devices are mostly located adjacent to an outer wall or in a corner, the apparatus may switch to a configuration that employs a higher number of high-gain directional antennas to focus coverage, as indicated in the use cases of Figure 2, thus improving network performance and reducing interference.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, a platform comprising user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus (for example, a module implementing a converter for converting one precision format to another, such as float32 to float16 and so on, and/or a module for performing a matrix multiplication, and/or a module for applying a scaling factor to a matrix) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. An apparatus (300) comprising:
at least one antenna structure (302) comprising at least two heterogeneous radio systems (310); and
a controller (301) configured to:
compare a set of performance metrics associated with the at least two heterogeneous radio systems (310) in relation to a set of devices connected to the apparatus (300); and
on the basis of the comparison, reconfigure at least one of a structural or functional parameter of one or more of the at least one heterogeneous radio systems (310), whereby to optimize radio performance of the apparatus (300) for the set of devices.

2. The apparatus (300) of claim 1, wherein the controller is further configured to:
trigger measurement of one or more radio link quality metrics for respective ones of the at least two heterogeneous radio systems (310); and
using the measured one or more radio link quality metrics, generate one or more performance metrics for the set of metrics, wherein a performance metric comprises one of a measure representative of a radio link quality metric or a predefined combination of respective measures of multiple radio link quality metrics.

3. The apparatus (300) of claim 2, wherein a radio link quality metric comprises one of: a radio frequency signal strength, a signal quality, throughput, packet error rate, at least one parameter associated with a radiation pattern.

4. The apparatus (300) of any preceding claim, wherein the at least two heterogeneous radio systems (310) comprise at least one of:
a phased array antenna structure;
a switchable antenna structure;
an omni directional antenna structure;
a high gain directional antenna structure;
a motorised antenna structure;
a wideband antenna structure;
a multiband antenna structure;
a switched beam antenna structure;
an adaptive array antenna structure.

5. The apparatus (300) of claim 4, wherein the at least one antenna structure is reconfigurable to provide omni-directional or high-gain directive radiation patterns.

6. The apparatus (300) of claim 4 or 5, wherein the at least one antenna structure is mechanically adjustable, whereby to vary an orientation of at least one antenna thereof.

7. The apparatus (300) of any preceding claim, further comprising:
a set of radio frequency, RF, switches configured to at least one of select or reconfigure one or more antennas of the at least one antenna structure (302).

8. The apparatus (300) of claim 7, wherein the controller (301) is configured to use the set of RF switches to select at least one pathway for signal routing between one or more antennas of the at least one antenna structure (302) and at least one transceiver of the apparatus (300).

9. The apparatus (300) of claim 7 or 8, wherein the controller (301) is configured to use the set of RF switches to select one or more of the at least two heterogeneous radio systems (310) for use.

10. The apparatus (300) of any of claims 7 to 9, wherein the controller (301) is configured to use the set of RF switches to select one or more frequency bands for use by the apparatus (300).

11. The apparatus (300) of any preceding claim, wherein the at least two heterogeneous radio systems (310) comprise at least one of:
a WiFi radio system operating in one or more of a 2.4GHz, 5GHz and 6GHz frequency band;
a 3GPP radio system operating according to one or more of a 5G and 6G or sub-7GHz spectrum technology.

12. A method, comprising:
comparing, by an apparatus, a set of performance metrics associated with the at least two heterogeneous radio systems in relation to a set of devices connected to the broadband apparatus (401); and
on the basis of the comparison, reconfiguring at least one of a structural or functional parameter of one or more of the at least one heterogeneous radio systems, whereby to optimize radio performance of the apparatus for the set of devices (402).

13. The method of claim 12, further comprising:
triggering measurement of one or more radio link quality metrics for respective ones of the at least two heterogeneous radio systems; and
using the measured one or more radio link quality metrics, generating one or more performance metrics for the set of metrics, wherein a performance metric comprises one of a measure representative of a radio link quality metric or a predefined combination of respective measures of multiple radio link quality metrics.

14. The method of claim 13, wherein a radio link quality metric comprises one of: a radio frequency signal strength, a signal quality, throughput, packet error rate, at least one parameter associated with a radiation pattern.

15. The method of any one of claims 12 to 14, wherein the at least two heterogeneous radio systems comprise at least one of:
a phased array antenna structure;
a switchable antenna structure;
an omni directional antenna structure;
a high gain directional antenna structure;
a motorised antenna structure;
a wideband antenna structure;
a multiband antenna structure;
a switched beam antenna structure;
an adaptive array antenna structure.
